# EUROPEAN PATENT APPLICATION

(11) **EP 4 787 513 A1**
(43) Date of publication of application: **05.08.2026**
(21) Application number: 24934368.2
(22) Date of filing: 20.12.2024
(51) Int. Cl.: H01M 10/04

(54) **STACKING TABLE, STACKING MACHINE, AND STACKING METHOD**

(30) Priority: 19.11.2024 CN 202422824046 U; 19.11.2024 CN 202411655309
(71) Applicant: Eve Power Co., Ltd., Jingmen, Hubei 448000 (CN)
(72) Inventor: YUE, Mingqiang, Jingmen, Hubei 448000 (CN); MA, Xifeng, Jingmen, Hubei 448000 (CN); HU, Xiaolong, Jingmen, Hubei 448000 (CN); JIANG, Congcong, Jingmen, Hubei 448000 (CN); MA, Tianguo, Jingmen, Hubei 448000 (CN); GUAN, Lin, Jingmen, Hubei 448000 (CN); PENG, Aicheng, Jingmen, Hubei 448000 (CN); WANG, Shifeng, Jingmen, Hubei 448000 (CN)
(74) Representative: Zinkler, Franz
(86) International application number: PCT/CN2024/141030
(87) International publication number: WO 2026/107918

(57) **Abstract**

A laminating platform, a laminating machine, and a laminating method are provided. The laminating platform includes a cutting mechanism and a plurality of laminating sub-platforms. Each of the laminating sub-platforms has a bearing surface configured to carry the composite strip A. The plurality of laminating sub-platforms shares a material receiving station; the plurality of laminating sub-platforms are moved in the first direction, so that the plurality of laminating sub-platforms are located at the material receiving station in turn. The cutting mechanism is configured to cut a portion of the composite strip A located between two adjacent laminating sub-platforms.

## Description

This application claims priority to Chinese Patent Applications No. 202411655309.4 and 202422824046.7 filed with China National Intellectual Property Administration on November 19, 2024, the entire contents of which are incorporated herein by reference.

### TECHNICAL FIELD

The present application relates to the technical field of batteries, in particular to a laminating platform, a laminating machine and a laminating method.

### BACKGROUND

An electrode assembly is one of the core components of a battery. According to the molding method, the electrode assembly is divided into a wound electrode assembly and a laminated electrode assembly. The main forming method of the laminated electrode assembly is as follows: firstly, a composite strip is formed by a forming device, then a plurality of composite sheets located at the ends of the composite strip are folded back and forth in a Z shape on a laminating platform to form a folded body, and then the folded body is cut off from the unfolded portion of the composite strip to form the laminated electrode assembly. The composite strip includes a plurality of separators, and a plurality of negative electrode plates and a plurality of positive electrode plates that are connected through the separators. Each of the negative electrode plates, the corresponding one of the positive electrode plates and one of the separators therebetween constitute a composite sheet. The plurality of composite sheets are sequentially stacked on the laminating platform.

After the end of the composite strip is folded back and forth on the laminating platform to form the folded body, the folded body needs to be cut from the unfolded portion of the composite strip.

### SUMMARY

After the folded body is cut from the unfolded portion of the composite strip, the end of the composite strip needs to be guided to the laminating platform again for the next lamination operation. When the end of the composite strip is guided to the laminating platform, not only the related operation equipment or the related staff needs to be additionally configured, but also the guiding time needs to be reserved for guiding the end of the composite strip. As such, the stacking efficiency of the laminated electrode assembly is low.

In a first aspect, the present application provides a laminating platform, including a laminating sub-platform and a cutting mechanism, where a plurality of laminating sub-platforms are provided, the plurality of laminating sub-platforms are sequentially disposed in a first direction. Each of the laminating sub-platforms includes a bearing surface configured to carry a composite strip A. The plurality of laminating sub-platforms share a material receiving station, and the plurality of laminating sub-platforms are configured to move in the first direction to enable the plurality of laminating sub-platforms to be located at the material receiving station in turn. The cutting mechanism is configured to cut a part of the composite strip A located between adjacent two of the laminating sub-platforms.

In a second aspect, the present application provides a laminating machine, including a forming device and the above-mentioned laminating platform. The forming device is configured to form a composite strip A, and the composite strip A includes a plurality of composite sheets sequentially connected by at least one separator, where the composite strip A output by the forming device is configured to move in a second direction toward a bearing surface, and the second direction is perpendicular to the bearing surface.

In a third aspect, the present application provides a laminating method, which is applied to stacking a composite strip A on a laminating platform provided by some embodiments of the present application, where the composite strip A includes a plurality of composite sheets sequentially connected by at least one separator.

The laminating method includes:
conveying the composite strip A onto the bearing surface of one of the laminating sub-platforms located at the material receiving station, and sequentially stacking adjacent two of the composite sheets in a direction perpendicular to the bearing surface;
moving the plurality of laminating sub-platforms in a first direction when the number of the composite sheets stacked on one of the laminating sub-platforms located at the material receiving station reaches a preset value, to enable that one of the laminating sub-platforms with the number of the composite sheets carried by the bearing surface reaching the preset value is located on a side of the material receiving station, and another one of the laminating sub-platforms is located at the material receiving station; and
cutting off a portion of the separator located between adjacent two of the laminating sub-platforms by the cutting mechanism when at least one composite sheet falls onto the bearing surface of one of the laminating sub-platforms located at the material receiving station.

### BENEFICIAL EFFECTS

In the present application, the plurality of laminating sub-platforms are sequentially arranged in a first direction and moved in the first direction to be located at the material receiving station in turn, so that the composite strip A carried by the next laminating sub-platform located at the material receiving station can be guided by the movement of the previous laminating sub-platform 11 located at the material receiving station. In this way, the position controllability of the composite strip A carried by the laminating sub-platform can be effectively ensured without additional material guiding operations, thereby improving the stacking efficiency of the laminated electrode assembly.

### BRIEF DESCRIPTION OF THE DRAWINGS

FIG. 1 is a schematic view of a structure of a laminating platform according to an embodiment of the present application.
FIG. 2 is a schematic view of a structure of a laminating platform receiving material according to an embodiment of the present application.
FIG. 3 is a schematic view of a structure of a laminating sub-platform according to an embodiment of the present application.
FIG. 4 is another schematic view of a structure of a laminating platform receiving material according to an embodiment of the present application.
FIG. 5 is a schematic view of switching a laminating sub-platform for the material receiving of the laminating platform shown in FIG. 4.
FIG. 6 is an enlarged view of A in FIG. 1.
FIG. 7 is another schematic view of a structure of a laminating platform according to an embodiment of the present application.
FIG. 8 is a schematic view of a structure of a laminating machine according to an embodiment of the present application.
FIG. 9 is a top view of a composite strip according to an embodiment of present application.
FIG. 10 is a schematic view of a structure of a composite strip according to an embodiment of the present application.
FIG. 11 is a schematic view of a positional relationship between an image capture terminal and a working end of a separator edge-sealing mechanism according to an embodiment of the present application.
FIG. 12 is a schematic view of a position relationship between a material guiding mechanism and a bearing surface according to an embodiment of the present application.
FIG. 13 is a schematic flowchart of a laminating method according to an embodiment of the present application.
FIG. 14 is a schematic view of a structure of a laminating platform receiving material under a first state according to an embodiment of the present application.
FIG. 15 is a schematic view of a structure of a laminating platform receiving material under a second state according to an embodiment of the present application.
FIG. 16 is a schematic view of a structure of a laminating platform receiving material under a third state according to an embodiment of the present application.
FIG. 17 is a schematic view of a structure of a laminating platform receiving material under a fourth state according to an embodiment of present application.
FIG. 18 is a schematic view of a structure of a laminating platform receiving material under a fifth state according to an embodiment of the present application.

### Description of reference numerals:

1, laminating platform;
11, laminating sub-platform; 111, bearing surface; 112, bearing plate; 113, lifting mechanism; 114, fixed baffle; 115, synchronous baffle; 116, assembly plate;
12, first laminating sub-platform; 13, second laminating sub-platform;
14, material receiving station;
15, cutting mechanism; 151, cutter; 152, second drive assembly; 153, third drive assembly; 154, pressure cutter;
16, transposition drive assembly;
2, laminating machine; 21, forming device;
22, first feeding mechanism; 221, first unwinding assembly; 222, first tab die-cutting assembly; 223, first electrode plate cutting assembly;
23, separator feeding mechanism;
24, first thermal compounding mechanism; 241, first heating assembly; 242, first compression roller assembly;
25, second feeding mechanism; 251, second unwinding assembly; 252, second tab die-cutting assembly; 253, second electrode plate cutting assembly; 254, second sheet feeding device;
26, second thermal compounding mechanism; 261, second heating assembly; 262, second compression roller assembly;
27, heating and heat preservation assembly;
28, separator edge-sealing mechanism; 281, working end;
29, deviation rectifying device; 291, image capture terminal;
300, material guiding mechanism; 301, drive roller set; 302, drive roller; 303, first end;
31, material line detection camera;
10, first electrode plate; 20, second electrode plate; 30, separator; 40, composite strip A; 400, composite sheet; 50, composite strip B; 60, first electrode plate roll; 70, second electrode plate roll.

### DETAILED DESCRIPTION

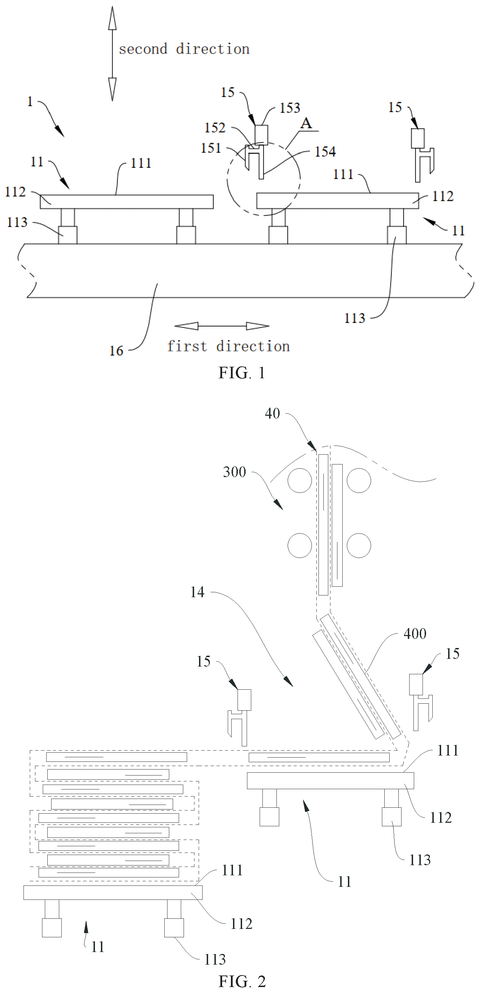

Referring to FIG. 1 and FIG. 2, FIG. 1 is a schematic view of a structure of a laminating platform 1 according to an embodiment of the present application, and FIG. 2 is a schematic view of a structure of a laminating platform 1 receiving material according to an embodiment of the present application. The embodiments of the present application provide a laminating platform 1. The laminating platform 1 includes a laminating sub-platform 11 and a cutting mechanism 15. A plurality of laminating sub-platform 11 may be provided. The plurality of laminating sub-platform 11 are sequentially arranged in a first direction. The laminating sub-platform 11 has a bearing surface 111 configured to bear the composite strip A40. The plurality of laminating sub-platform 11 shares a material receiving station 14. The plurality of laminating sub-platforms 11 are moved in the first direction to enable the plurality of laminating sub-platforms 11 to be located at the material receiving station 14 in turn. The cutting mechanism 15 is configured to cut a portion of the composite strip A40 located between two adjacent laminating sub-platforms 11.

It can be understood that the composite strip A40 includes a plurality of composite sheets 400, and the composite sheet 400 includes a separator 30, a negative electrode plate, the separator 30, and a positive electrode plate that are sequentially compounded. The separators 30 of two adjacent composite sheets 400 are connected to each other.

It may be understood that the cutting mechanism 15 may be disposed on a side of the laminating sub-platform 11, or may be disposed on a side of the material receiving station, or may be held on the hand by an operator.

It can be understood that, in order to reduce the material receiving difficulty, the bearing surface 111 is parallel to the horizontal plane, and the composite strip A40 may fall onto the bearing surface 111 under the action of gravity.

It can be understood that the movement of the laminating sub-platform 11 in the first direction may be implemented by a drive assembly or may be implemented by a manual operation.

It can be understood that one material receiving station 14 may be provided, and the position where the laminating sub-platform 11 provided on a side of the material receiving station 14 is located may be an unloading station.

It can be understood that the number of the laminating sub-platform 11 may be two or more. When the number of the laminating sub-platforms 11 is two, the first direction is a linear direction, and the two laminating sub-platforms 11 are moved back and forth in the first direction, so that the two laminating sub-platforms 11 can be located at the material receiving station 14 and the unloading station in turn. When there are a plurality of laminating sub-platforms 11, the first direction may be a linear direction. In this case, the laminating sub-platforms 11 may be sequentially moved in one direction, so that the plurality of laminating sub-platforms 11 are located at the material receiving station 14 in turn. After all the laminating sub-platforms 11 complete the material receiving, the laminating sub-platforms 11 are sequentially moved in a opposite direction, so that the plurality of laminating sub-platforms 11 are located at the material receiving station 14 again in turn for material receiving.

In addition, when there are a plurality of laminating sub-platforms 11, the first direction may be a rotation direction, for example, a clockwise direction or a counterclockwise direction. In this case, the plurality of laminating sub-platforms 11 may be arranged in a ring shape, so that the plurality of laminating sub-platforms 11 may be located at the material receiving station 14 in turn by sequentially moving the plurality of laminating sub-platforms 11 in the clockwise direction or the counterclockwise direction. In order to adapt to the formation of the composite sheet 400, the movement trajectory of the laminating sub-platform 11 at the material receiving position is a straight line.

As shown in FIG. 2, during material receiving, when the number of composite sheets 400 carried by the laminating sub-platform 11 located at the material receiving station 14 reaches a preset value, the plurality of laminating sub-platforms 11 are moved in the first direction, so that the laminating sub-platform 11, which carries the composite sheets 400 up to the preset quantity, is located at the unloading station, and the other laminating sub-platform 11 is located at the material receiving station 14. With the movement of the laminating sub-platforms 11, the continuously conveyed composite sheets 400 automatically fall onto the next bearing surface 111 located at the material receiving station 14 to perform the stacking operation of the next laminated electrode assembly. Then, the portion of the composite strip A40 located between two adjacent laminating sub-platform 11 is cut by the cutting mechanism 15, so that the composite sheets 400 located at the unloading station can be unloaded.

In some embodiments, the plurality of laminating sub-platforms 11 are sequentially arranged in a first direction and moved in the first direction to be located at the material receiving station 14 in turn, so that the composite strip A40 carried by the next laminating sub-platform 11 located at the material receiving station 14 can be guided by the movement of the previous laminating sub-platform 11 located at the material receiving station 14. In this way, on the one hand, the position controllability of the composite strip A40 carried by the laminating sub-platform 11 can be effectively ensured, and no additional material guiding operation is required, thereby improving the stacking efficiency of the laminated electrode assembly; on the other hand, the alignment of the leading and trailing composite sheets 400 of each laminated electrode assembly can be improved, thereby improving the stacking regularity of the electrode assembly stacked on the laminating platform 1.

The material guiding operation refers to guiding the cutting end of the composite strip A40 to a preset position on the bearing surface 111, so that the end portion of the composite strip A40 from the forming device can be folded back and forth on the bearing surface 111 in a Z shape in a preset folding direction under the action of gravity to form a neat folded body.

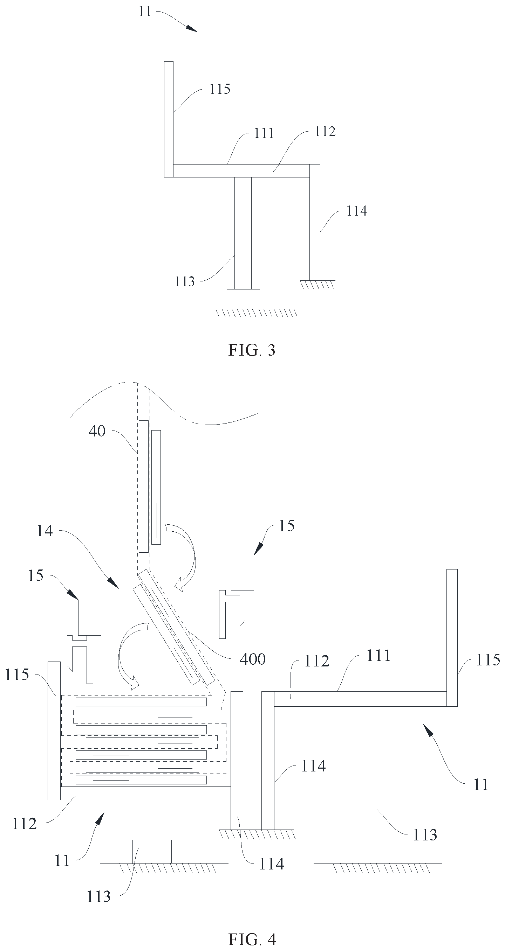

Referring to FIG. 3, FIG. 3 is a schematic view of a structure of a laminating sub-platform 11 according to an embodiment of the present application. In an embodiment, the laminating sub-platform 11 includes a bearing plate 112 and a lifting mechanism 113. The bearing plate 112 has a bearing surface 111. The lifting mechanism 113 is connected to the bearing plate 112. The lifting mechanism 113 is configured to adjust a height of the bearing surface 111.

For example, the lifting mechanism 113 includes but is not limited to a linear motor, a pneumatic rod, a hydraulic rod, a worm and worm gear assembly, a scissor-type telescopic assembly, a lead screw assembly, or return spring.

It can be understood that the drive end of the lifting mechanism 113 is connected to the bearing plate 112.

It can be understood that the lifting mechanism 113 may be fixed to any structure other than the laminating sub-platform 11 and capable of moving with the laminating sub-platform 11 in the first direction.

It can be understood that as the composite sheets 400 are stacked on the bearing surface 111 located at the material receiving station 14, the height of the stacked composite sheets 400 will increase continuously. If the height of the bearing surface 111 is not adjusted, the falling position of the composite sheet 400 will increase continuously, so that the smoothness of the composite sheets 400 falling into the laminating sub-platform 11 subsequently decreases.

Based on this, in some embodiments, the lifting mechanism 113 is configured to adjust the height of the bearing surface 111, as shown in FIG. 4, which is a schematic view of material receiving by another laminating platform 1 according to an embodiment of the present application. As the stacking height of the composite sheets 400 continuously increases, the height of the bearing plate 112 is adjusted by the lifting mechanism 113, so that the height of the bearing plate 112 continuously decreases. When the bearing plate 112 is empty, the bearing plate 112 is at the highest position. Optionally, the height of the vacant bearing surface 111 is the same as the height of the top surface loaded with a preset number of composite sheets 400. When the bearing plate 112 is loaded with the preset number of composite sheets 400, the height of the bearing plate 112 is the lowest.

In some embodiments, by providing the lifting mechanism 113 for adjusting the height of the bearing surface 111, the height of the bearing surface 111 can be continuously reduced as the stacking height of the composite sheet 400 is continuously increased, so that the falling positions of the composite sheets 400 are consistent, thereby improving the smoothness of the composite sheets 400 falling into the laminating sub-platform 11 subsequently.

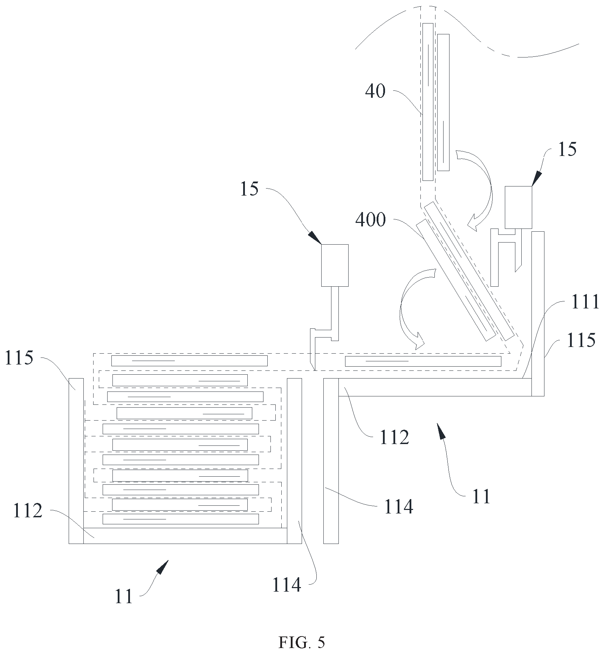

Moreover, by providing the lifting mechanism 113 to adjust the height of the bearing surface 111, the height of the top surface of the stacked composite sheets 400 can be consistent with the height of the bearing surface 111 of the next laminating sub-platform 11 carrying one composite sheet 400. In this way, not only the smoothness of the cutting mechanism 15 cutting the portion of the composite strip A40 located between the two adjacent laminating sub-platforms 11 can be improved, but also the support of the bearing plate 112 located at the material receiving station 14 for the composite sheets 400 can be improved, so as to improve the smoothness of the cutting, as shown in FIG. 5, which is a schematic view of switching the laminating sub-platform 11 for the material receiving of the laminating platform 1 shown in FIG. 4.

In addition, by providing the lifting mechanism 113 to adjust the height of the bearing surface 111, the height of the top surface of the stacked composite sheets 400 can be the same as the height of the bearing surface 111 of the laminating sub-platform 11 carrying one composite sheet 400, so that the composite sheet 400 on the next laminating sub-platform 11 for receiving material can be in a horizontal position, so that there is a large contact area between the composite sheet 400 and the corresponding bearing surface 111. In this way, after the portion of the composite strip A40 between the two adjacent laminating sub-platforms 11 is cut off, the position stability of the composite sheet 400 on the next laminating sub-platform 11 for receiving material is good. In this way, the smoothness of the material guiding of the next laminating sub-platform 11 located at the material receiving station 14 for carrying the composite strip A40 can be improved by the movement of the previous laminating sub-platform 11 located at the material receiving station 14.

Referring to FIG. 3, in some embodiments, the laminating sub-platform 11 further includes a fixed baffle 114. The fixed baffle 114 is fixed relative to the lifting mechanism 113. The fixed baffles 114 of two adjacent laminating sub-platform 11 in the first direction are disposed adjacent to each other. When the bearing plate 112 is at the lowest position, the fixed baffle 114 is at least partially located on a side of the bearing surface 111 close to the composite strip A40. When the bearing plate 112 is in the highest position, the fixed baffle 114 does not extend beyond the bearing surface 111.

It can be understood that the fixed baffle 114 is fixed relative to the lifting mechanism 113, which specifically means that the fixed baffle 114, like the lifting mechanism 113, can move with the movement of the corresponding laminating sub-platform 11, but does not move with the movement of the drive end of the lifting mechanism 113.

It can be understood that the fixed baffle 114 may be fixed to any structure other than the laminating sub-platform 11 and capable of moving with the laminating sub-platform 11 in the first direction, for example, fixed to the housing of the lifting mechanism 113.

It can be understood that as the stacking height of the composite sheets 400 continuously increases, the height of the bearing plate 112 continuously decreases, so that the height of a part of the fixed baffle 114 on a side of the bearing surface 111 close to the composite strip A40 continuously increases, as shown in FIGs. 4 and 5. In this way, the stacked composite sheets 400 can be limited by the fixed baffle 114, so that the stacked composite sheets 400 can be prevented from moving relative to the bearing plate 112 due to inertia during the movement of the laminating sub-platform 11, thereby improving the movement speed of the laminating sub-platform 11 and improving the stacking efficiency of the laminated electrode assembly.

Referring to FIG. 3, in some embodiments, when the first direction is a linear direction, the laminating sub-platform 11 at the head or tail position of the first direction further includes a synchronous baffle 115. For the laminating sub-platform 11 located at the head or tail position in the first direction, the synchronous baffle 115 is connected to the bearing plate 112, and is at least partially located on a side of the bearing surface 111 close to the composite strip A40. The synchronous baffle 115 of the laminating sub-platform 11 at the head or tail position is disposed away from the adjacent laminating sub-platform 11.

It can be understood that a side of the laminating sub-platform 11 located at the head or tail position is provided with one laminating sub-platform 11, and the other side thereof is empty. Therefore, the synchronous baffle 115 may be provided on a side without provided any laminating sub-platform 11, of the laminating sub-platform 11 located at the head or tail position, to avoid affecting the stacking of the composite sheets 400.

In some embodiments, by providing the synchronous baffle 115 on the laminating sub-platform 11 located at the head or tail position, the stacked composite sheets 400 can be limited by the synchronous baffle 115, and the synchronous baffle 115 can be directly fixed to the bearing plate without additionally designing a sliding fit structure between the synchronous baffle 115 and the bearing plate, thereby reducing the design difficulty and manufacturing difficulty.

Referring to FIG. 1, FIG. 2, FIG. 4, or FIG. 5, in some embodiments, the cutting mechanism 15 includes a cutter 151 and a second drive assembly 152 connected to each other. The second drive assembly 152 drives the cutter 151 to reciprocate in the second direction. The second direction is perpendicular to the bearing surface 111. The cutter 151 is configured to cut a portion of the composite strip A40 located between two adjacent laminating sub-platforms 11.

For example, the second drive assembly 152 includes but is not limited to a linear motor, a pneumatic rod, a hydraulic rod, a worm and worm gear assembly, a scissor-type telescopic assembly, or a lead screw assembly.

It can be understood that the drive end of the second drive assembly 152 is connected to the cutter 151.

It can be understood that the second drive assembly 152 may be fixed to the laminating sub-platform 11, and in this case, the cutting mechanism 15 needs to be configured for each laminating sub-platform 11. The second drive assembly 152 may be fixed on the frame, so as to fix the position thereof, and cut off each composite strip A40 between the laminating sub-platform 11 located at the material receiving station 14 and the laminating sub-platform 11 located on a side of the material receiving station 14.

It can be understood that the length of the cutting edge of the cutter 151 is not less than the size of the portion of the composite strip to be cut in the extending direction of the cutting edge. In this way, the composite strip A40 can be cut by one cutting.

Referring to FIG. 1, FIG. 2, FIG. 4, or FIG. 5, in some embodiments, the cutting mechanism 15 further includes a pressure cutter 154 and a third drive assembly 153. The third drive assembly 153 is connected to the pressure cutter 154 and the second drive assembly 152. The third drive assembly 153 drives the pressure cutter 154 and the second drive assembly 152 to reciprocate in the second direction. The pressure cutter 154 is configured to press down the composite strip A40 located at the material receiving station 14.

Specifically, the pressure cutter 154 is configured to press down the edge of the separator 30 of the composite strip A40 at the material receiving station 14.

For example, the third drive assembly 153 includes but is not limited to a linear motor, a pneumatic rod, a hydraulic rod, a worm and worm gear assembly, a scissor-type telescopic assembly, or a lead screw assembly.

It can be understood that the drive end of the third drive assembly 153 is connected to the pressure cutter 154 and the second drive assembly 152.

It can be understood that the third drive assembly 153 may be fixed to the laminating sub-platform 11, and in this case, the cutting mechanism 15 needs to be configured for each laminating sub-platform 11. The third drive assembly 153 may be fixed on the frame, so as to fix the position thereof, and cut off each composite strip A40 between the laminating sub-platform 11 located at the material receiving station 14 and the laminating sub-platform 11 located on a side of the material receiving station 14.

It can be understood that when cutting the portion of the composite strip A40 located between two adjacent laminating sub-platforms 11, the third drive assembly 153 is started first, so that the pressure cutter 154 presses the composite strip A40, specifically, the pressure cutter 154 presses the separator 30 located between two adjacent composite sheets 400. Then, the second drive assembly 152 is started to move the pressure cutter 154 downward, so as to cut off a portion of the composite strip A40 located between two adjacent laminating sub-platforms 11.

In some embodiments, by providing the pressure cutter 154, the stacked composite strip can be fixed when the composite strip A40 is cut, thereby preventing the stacked composite sheet 400 from moving during the cutting process. In this way, the consistency of the positions of the composite sheets 400 before and after cutting can be effectively ensured, so as to improve the regularity of stacking of the composite sheets 400.

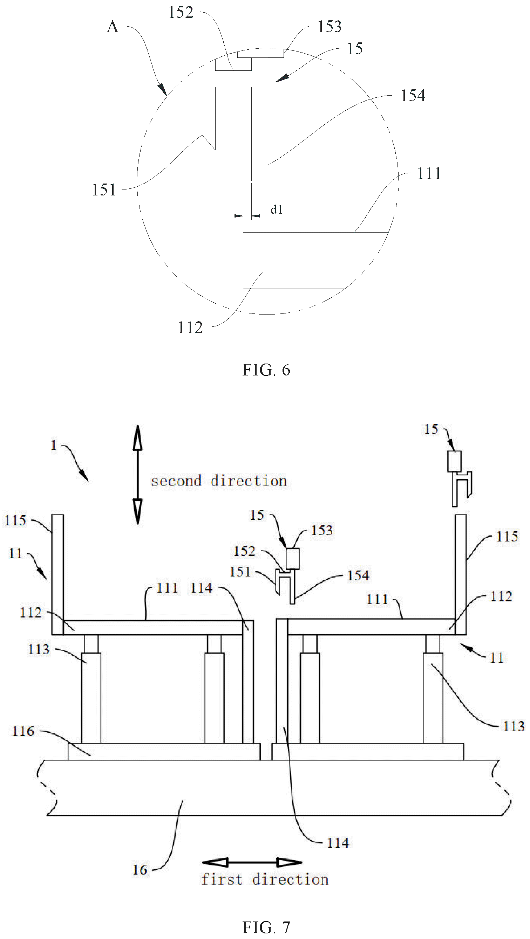

Referring to FIG.6, FIG. 6 is an enlarged view of A in FIG. 1. In some embodiments, a distance d1 between the pressure cutter 154 and an edge of the bearing surface 111 adjacent to the pressure cutter 154 is in a range of 2 mm to 6 mm.

It can be understood that the distance d1 between the pressure cutter 154 and the adjacent edge of the bearing surface 111 located at the material receiving station 14 includes, but is not limited to, 2 mm, 2.6 mm, 3 mm, 3.2 mm, 3.8 mm, 4 mm, 4.5 mm, 4.7 mm, 4.9 mm, 5 mm, 5.2 mm, 5.6 mm, 5.8 mm, or 6 mm.

In some embodiments, by limiting the distance d1 between the pressure cutter 154 and the edge of the bearing surface 111 adjacent to the pressure cutter 154, the current collectors and the active material layers of the positive and negative electrode plates can be prevented from being damaged during the cutting process of the pressure cutter 154, thereby ensuring the quality of the laminated electrode assembly.

Referring to FIG. 1 or FIG. 7, FIG. 7 is a schematic view of a structure of another laminating platform according to an embodiment of the present application. In some embodiments, the laminating platform 1 further includes a transposition drive assembly 16. The transposition drive assembly 16 is connected to the plurality of laminating sub-platform 11. The transposition drive assembly 16 drives the laminating sub-platform 11 located at the material receiving station 14 to move to a side of the material receiving station 14, and simultaneously drives another laminating sub-platform 11 to move to the material receiving station 14.

For example, the transposition drive assembly 16 includes but is not limited to a linear motor, a pneumatic rod, a hydraulic rod, a worm and worm gear assembly, a scissor-type telescopic assembly, or a lead screw assembly.

It can be understood that a drive end of the transposition drive assembly 16 is connected to the laminating sub-platforms 11.

It can be understood that the transposition drive assembly 16 may be fixed to the frame, or may be directly fixed to the ground.

Specifically, the transposition drive assembly 16 is a lead screw assembly. An axis of the lead screw is parallel to the first direction. A drive nut is threaded on the lead screw. The drive nut serves as a drive end of the drive assembly. The screw rod rotates forward or backward to drive the nut to move back and forth in the first direction, so as to drive the laminating sub-platform 11 to move back and forth in the first direction.

Specifically, the lifting mechanism 113 and the fixed baffle 114 are fixed to the drive end of the transposition drive assembly 16.

In some embodiments, the laminating sub-platform 11 is driven to move in the first direction by the transposition drive assembly 16, which can reduce the labor intensity of workers and ensure the movement consistency of the plurality of laminating sub-platforms 11, so as to facilitate smooth stacking of the composite sheets 400.

In addition, as shown in FIG. 7, in order to improve the integrity of the plurality of laminating sub-platforms 11, a plurality of assembly plates 116 may be provided between the laminating sub-platforms 11 and the drive end of the transposition drive assembly 16, so that the laminating sub-platform 11 may be assembled on the assembly plate 116, and then fixed to the drive end of the transposition drive assembly 16 through the assembly plate 116, thereby improving the assembly convenience.

Referring to FIG. 1, FIG. 2, FIG. 4, or FIG. 5, in some embodiments, there are two cutting mechanisms 15. Along the first direction, the two cutting mechanisms 15 are respectively located on two sides of the material receiving station 14. In addition, in the feeding direction of the composite strip A40, the structures of the two cutting mechanisms 15 are symmetrical to each other. In this way, the arrangement difficulty of the cutting mechanisms 15 can be reduced, and one of the cutting mechanisms 15 to be processed can be maintained during the operation of continuously cutting the composite strip A40, so as to improve the smoothness of the stacking of the composite sheets 400.

Referring to FIG. 1, FIG. 2, FIG. 4, or FIG. 5, in some embodiments, there are two laminating sub-platforms 11. The two laminating sub-platforms 11 are moved back and forth in the first direction, so that the two laminating sub-platforms 11 are located at the material receiving station 14 in turn. In this way, the number of the laminating sub-platforms 11 can be reduced, so that the stacking of the composite sheets 400 can be satisfied, and the switching complexity of the laminating sub-platforms 11 can be reduced, thereby improving the smoothness of the stacking of the composite sheets 400.

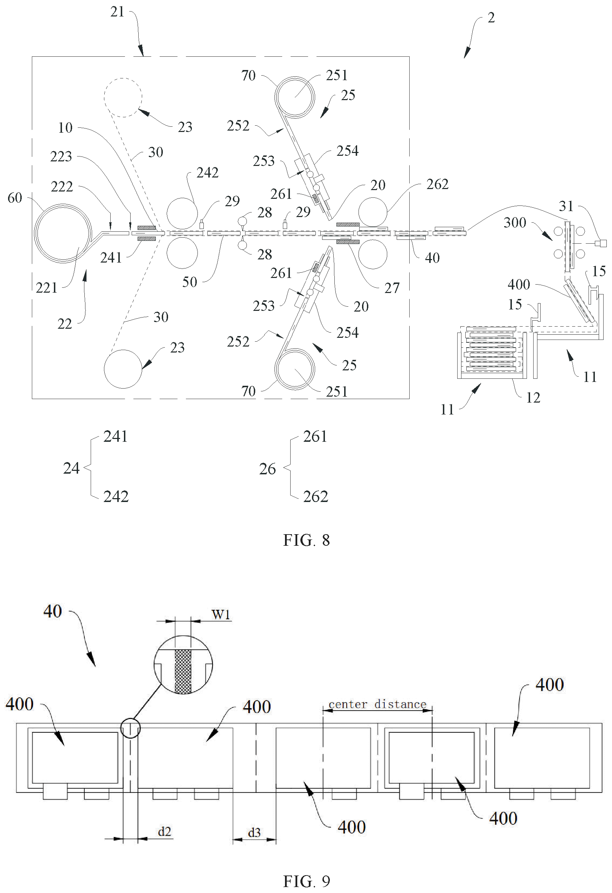

Referring to FIG. 8, FIG. 8 is a schematic view of a structure of a laminating machine 2 according to an embodiment of the present application. Accordingly, some embodiments of the present application provide a laminating machine 2. The laminating machine 2 includes a forming device 21 and the aforementioned laminating platform 1. The forming device 21 is configured to mold the composite strip A40. The composite strip A40 includes a plurality of composite sheets 400 sequentially connected by the separators 30. The separators 30 of two adjacent composite sheets 400 are connected to each other. The composite strip A40 output by the forming device 21 moves in the second direction toward the bearing surface 111, and the second direction is perpendicular to the bearing surface 111.

In some embodiments, by using the laminating platform 1 provided by some embodiments of the present application, the plurality of laminating sub-platforms 11 are sequentially arranged in the first direction and moved in the first direction to be located at the material receiving station 14 in turn, so that the composite strip A40 carried by the next laminating sub-platform 11 located at the material receiving station 14 can be guided by the movement of the previous laminating sub-platform 11 located at the material receiving station 14. In this way, the position controllability of the composite strip A40 carried by the laminating sub-platform 11 can be effectively ensured without additional material guiding operations, thereby improving the stacking efficiency of the laminated electrode assembly.

Referring to FIG. 8, in some embodiments, the forming device 21 includes a first feeding mechanism 22, a separator feeding mechanism 23, a first thermal compounding mechanism 24, a second feeding mechanism 25, and a second thermal compounding mechanism 26. The first feeding mechanism 22 is configured to provide a plurality of first electrode plates 10. There are two separator feeding mechanisms 23, the two separator feeding mechanisms 23 are provided on two sides of the first feeding mechanism 22, respectively, and the two separator feeding mechanisms 23 are configured to feed a separator 30 respectively to the two sides of the first electrode plate 10. The first thermal compounding mechanism 24 is configured to heat at least one of the separator 30 and the first electrode plate 10, and press the separator 30 and the first electrode plate 10 to form a composite strip B50. There are two second feeding mechanisms 25, the two second feeding mechanisms 25 are provided on two sides of the first feeding mechanism 22, respectively, and the two second feeding mechanisms 25 are configured to feed a plurality of second electrode plates 20 respectively to the two sides of the composite strip B50, and the two second feeding mechanisms 25 are alternately fed in sequence. The second thermal compounding mechanism 26 is configured to heat at least one of the composite strip and the second electrode plate 20, and press the second electrode plate 20 and the composite strip B50 to form a composite strip A40.

It can be understood that the speed at which the first feeding mechanism 22 and the second feeding mechanism 25 transport the first electrode plate 10 and the second electrode plate 20 can be adjusted, so that the spacing between two adjacent composite sheets 400 can adapt to different production requirements. For example, when the first electrode plate 10 and the second electrode plate 20 conveyed by the first feeding mechanism 22 and the second feeding mechanism 25 belong to the same laminated electrode assembly, the feeding speed can be made larger, so that the distance d2 between two adjacent composite sheets 400 is smaller. Optionally, the distance d2 is in a range of 1 mm to 2 mm, as shown in FIG. 9, which is a top view of a composite strip according to an embodiment of the present application.

When the first electrode plate 10 and the second electrode plate 20 conveyed by the first feeding mechanism 22 and the second feeding mechanism 25 and the previous first electrode plate 10 and the previous second electrode plate 20 belong to two laminated electrode assemblies, the feeding speed can be reduced, so that the spacing d3 between the two laminated electrode assemblies is large, and the cutting mechanism 15 can cut smoothly. Optionally, the spacing d3 is in a range of 0.3 mm to 0.5 mm, as shown in FIG. 9.

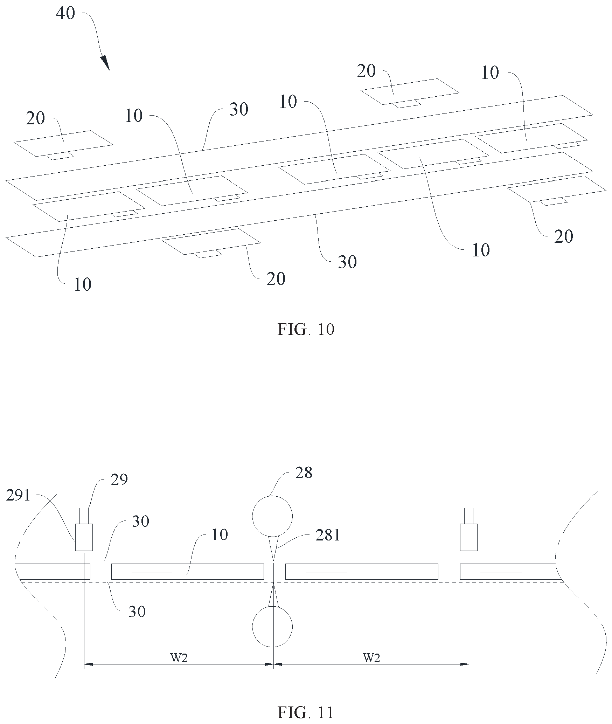

In addition, in order to avoid lithium precipitation, the number of negative electrode plates is greater than the number of positive electrode plates in each electrode assembly. For example, the negative electrode plate and the separator 30 may be compounded in the head composite lamination or the tail composite lamination of each electrode assembly, as shown in FIG. 10, which is a schematic view of a structure of a composite strip according to an embodiment of the present application.

Referring to FIG. 8, in some embodiments, the first thermal compounding mechanism 24 includes a first heating assembly 241 and a first compression roller assembly 242. The first heating assembly 241 is configured to heat the first electrode plate 10. The first compression roller assembly 242 is configured to press the separator 30 with the heated first electrode plate 10. In some embodiments, by heating the first electrode plate 10 so that the first electrode plate 10 and the separator 30 are integrated, on the one hand, the blockage of the vent holes of the separator 30 can be effectively avoided, thereby ensuring the air permeability of the separator 30; on the other hand, it can avoid the surface rubber particles of the separator 30 to stick to the roller caused by heating the separator 30, thereby reducing the cleaning difficulty of the first compression roller assembly 242.

Moreover, the manner of heating the separator 30 by the first compression roller assembly 242 is eliminated, which can reduce the structural complexity of the first compression roller, thereby reducing the manufacturing cost of the laminating machine 2.

Optionally, the first compression roller assembly 242 includes two composite rollers opposite to each other. The two composite rollers press the first electrode plate 10 and the separator 30 that are stacked together, so that the first electrode plate 10 and the separator 30 are integrally connected.

A distance between the heating end of the first heating assembly 241 and the first electrode plate 10 may be in a range of 3 mm to 5 mm. The first heating assembly 241 may heat the first electrode plate 10 to 80°C to 180°C. In this way, the first electrode plate 10 can not only melt the separator 30 to integrate the first electrode plate 10 and the separator 30 together, but also prevent the first electrode plate 10 from being damaged due to a relatively high temperature.

Referring to FIG. 8, in some embodiments, the second thermal compounding mechanism 26 includes a second heating assembly 261 and a second compression roller assembly 262. The second heating assembly 261 is configured to heat the second electrode plate 20. The second compression roller assembly 262 is configured to press the composite strip B50 with the heated second electrode plate 20. There are two second heating assemblies 261, which are respectively disposed adjacent to the discharge ports of the two second feeding mechanisms 25. In some embodiments, by heating the second electrode plate 20 so that the second electrode plate 20 and the composite strip B50 are integrated, on the one hand, the blockage of the vent holes of the separator 30 can be effectively avoided, thereby ensuring the air permeability of the separator 30; on the other hand, it can avoid the surface rubber particles of the separator 30 to stick to the roller caused by heating the separator 30, thereby reducing the cleaning difficulty of the second compression roller assembly 262.

Optionally, the second compression roller assembly 262 includes two composite rollers opposite each other. The two composite rollers press the second electrode plate 20 and the composite strip B50 that are stacked together, so that the second electrode plate 20 and the composite strip B50 are integrally connected.

Moreover, the manner of heating the separator 30 by the second compression roller assembly 262 is eliminated, which can reduce the structural complexity of the second compression roller, thereby reducing the manufacturing cost of the laminating machine 2.

A distance between the heating end of the second heating assembly 261 and the first electrode plate 10 may be in a range of 3 mm to 5 mm. The second heating assembly 261 may heat the second electrode plate 20 to 80°C to 180°C. In this way, the second electrode plate 20 can not only melt the separator 30 to integrate the second electrode plate 20 and the separator 30, but also prevent the second electrode plate 20 from being damaged due to high temperature.

In addition, compared with a manner in which the two second heating assemblies 261 are disposed at a position at which the second electrode plate 20 is in contact with the composite strip B50 to heat the second electrode plate 20, disposing the two second heating assemblies 261 adjacent to the discharge ports of the two second feeding mechanisms 25, respectively, can not only reduce an arrangement length of the forming device 21, so as to reduce an area occupied by the forming device 21, but also avoid affecting the separator 30 by heating the second electrode plate 20, thereby effectively ensuring air permeability of the separator 30.

Referring to FIG. 8, in some embodiments, the forming device 21 further includes a heating and heat preservation assembly 27. The heating and heat preservation assembly 27 is disposed between the second feeding mechanism 25 and the second compression roller assembly 262. The heating and heat preservation assembly 27 is configured to preserve heat for the second electrode plate 20, which is in contact with the composite strip B50 and is heated.

The heating temperature of the heating and heat preservation assembly 27 ranges from 40°C to 80°C.

Optionally, the heating and heat preservation assembly 27 may be an oven. The second electrode plate 20 is in contact with the composite strip B50 and then enters the heating and heat preservation assembly 27 from one end of the heating and heat preservation assembly 27, and is output from the other end and then enters the second compression roller assembly 262.

It can be understood that since the two second heating assemblies 261 are respectively disposed adjacent to the discharge ports of the two second feeding mechanisms 25, when the second electrode plate 20 is heated to be compounded on the composite strip B50 by the second compression roller assembly 262, this stroke is relatively long, which easily leads to a relatively low temperature when the second electrode plate 20 and the composite strip B50 are compounded.

Based on this, in some embodiments, by providing the heating and heat preservation assembly 27, the second electrode plate 20 can be heated and heat preserved, so as to effectively ensure the compounding temperature of the molded composite strip A40 and ensure the molding quality of the composite strip.

In some embodiments, the heating mode of the first thermal compounding mechanism 24 and/or the second thermal compounding mechanism 26 is any one of the following heating modes: electric heating, magnetic field heating, and heat exchange plate heating.

Optionally, the first thermal compounding mechanism 24 and the second thermal compounding mechanism 26 are heated by electromagnetic heating. Electromagnetic heating is a heating mode that uses the principle of electromagnetic induction to convert electrical energy into thermal energy. During the electromagnetic heating process, the first thermal compounding mechanism 24 and the second thermal compounding mechanism 26 generate alternating magnetic fields through electronic circuit board components. When the first electrode plate 10 and the second electrode plate 20 enter the magnetic field, magnetic lines of force generate alternating currents, that is, eddy currents, at the current collector of the first electrode plate 10 and the current collector of the second electrode plate 20. The atoms of the eddy current collector move irregularly at a high speed, and the atoms collide and rub with each other to generate heat energy.

The electromagnetic heating can reduce the loss in the heat transfer process, and can make the first electrode plate 10 and the second electrode plate 20 reach a higher temperature in a short time, and can improve the control accuracy of the heating temperature. In this way, the stacking efficiency of the laminated electrode assembly can be improved.

Referring to FIG. 8, in some embodiments, the forming device 21 further includes a separator edge-sealing mechanism 28. The separator edge-sealing mechanism 28 is provided between the discharge ports of the first thermal compounding mechanism 24 and the second feeding mechanism 25. The separator edge-sealing mechanism 28 is configured to connect the portion of two layers of separators 30 between two adjacent first electrode plates 10. In this way, after the composite strip A40 is cut, the cut portion of the separator 30 can be connected as a whole through the edge sealing operation, so as to effectively prevent the separator 30 from flanging, thereby improving the insulation isolation between the positive electrode plate and negative electrode plate. In this way, the quality of the stacked electrode assembly can be improved.

It can be understood that the extension direction of the hot melt seam formed by the separator edge-sealing mechanism 28 on the separator 30 is perpendicular to the conveying direction of the composite strip.

Optionally, the working end 281 of the separator 30 edge-sealing mechanism is a cam mechanism. The cam mechanism rotates such that its outer peripheral surface is in contact with the separator 30. The cam mechanism is electrically and thermally conductive to heat and melt the separators 30 so that the separators 30 on both sides of the electrode plate are connected to each other.

Optionally, the width dimension w1 of the hot-melt seam formed by the hot melt connection of the separator 30 by the separator edge-sealing mechanism 28 is 0.3 mm to 0.5 mm, as shown in FIG. 9.

Referring to FIG. 8, in some embodiments, the forming device 21 further includes a deviation rectifying device 29. A part of the separator 30 located between two adjacent first electrode plates 10 is a spacing part. The deviation rectifying device 29 collects the position information of the spacing part relative to the working end 281 of the separator edge-sealing mechanism 28, and controls the conveying speed of the composite strip A40 according to the position information.

The deviation rectifying device 29 includes an image capture terminal 291 configured to acquire position information, and the image capture terminal is a collection position of a charge coupled device (CCD) visual camera.

It can be understood that the working end 281 refers to a component of the separator 30 edge-sealing mechanism configured to connect two layers of separators 30 together, for example, the working end 281 of the cam-type separator 30 edge-sealing mechanism is a cam.

Optionally, there are two image capture terminals 291, and the two image capture terminals 291 are respectively provided on two sides of the working end 281 of the separator 30 edge-sealing mechanism in the conveying direction of the composite strip A40.

In some embodiments, by providing the deviation rectifying device 29, the conveying speed of the composite strip A40 can be controlled according to the position information of the spacing part relative to the working end 281 of the separator 30 edge-sealing mechanism, so as to ensure the control closed loop of the deviation correction operation, thereby effectively ensuring the correspondence between the spacing part and the working end of the separator 30 edge-sealing mechanism, and effectively ensuring the accuracy of the position of the hot melt seam.

Referring to FIG. 11, FIG. 11 is a schematic view of a position relationship between an image capture terminal 291 and a working end 281 of the separator 30 edge-sealing mechanism according to an embodiment of the present application. In some embodiments, the distance W2 between the image capture terminal 291 and the working end 281 of the separator edge-sealing mechanism 28 is 1 to 3 times of a center spacing. The center spacing is a distance between centers of two adjacent composite sheets 400 when the composite strip A40 is in the flattened state.

It can be understood that the distance W2 between the image capture terminal 291 and the working end 281 of the separator edge-sealing mechanism 28 includes, but is not limited to, 1 time of the center spacing, 1.5 times of the center spacing, 2 times of the center spacing, 2.2 times of the center spacing, 2.8 times of the center spacing, or 3 times of the center spacing.

In some embodiments, through the above limitation, on the one hand, it can be avoided that the spacing is too small, so that sufficient adjustment time can be provided for the deviation rectifying device 29 to control the conveying speed of the composite strip A40 according to the position information; on the other hand, it can be avoided that the spacing is too large, so that the position information of a spacing part relative to the working end 281 of the separator 30 edge-sealing mechanism can be avoided from being missed.

In some embodiments, the first feeding mechanism 22 includes a first unwinding assembly 221, a first tab die-cutting assembly 222, and a first electrode plate 10 cutting assembly 223. The first unwinding assembly 221 is configured to mount the first electrode plate 10 roll. The first tab die-cutting assembly 222 is configured to cut the uncoated foil region of the first electrode plate 10 roll from the first unwinding assembly 221 to form the first tab. The first electrode plate 10 cutting assembly 223 is configured to cut the first electrode plate 10 roll cut by the first tab die-cutting assembly 222 to form the first electrode plate 10. In this way, the first feeding mechanism 22 is simple and easy to manufacture.

The power source for moving the first electrode plate 10 from the first feeding machine to contact with the separator 30 may be the first feeding machine, or may be a first heat load mechanism, or may be configured with a sheet feeding device, so that the first electrode plate 10 roll from the first unwinding assembly 221 is conveyed between the two layers of separators 30 through the sheet feeding device.

Referring to FIG. 8, in some embodiments, the second feeding mechanism 25 includes a second unwinding assembly 251, a second tab die-cutting assembly 252, a second electrode plate 20 cutting assembly 253, and a second sheet feeding device 254. The second unwinding assembly 251 is configured to mount a second electrode plate 20 roll. The second tab die-cutting assembly 252 is configured to cut the uncoated foil region of the second electrode plate 20 roll from the second unwinding assembly 251 to form the second tab. The second electrode plate 20 cutting assembly 253 is configured to cut the second electrode plate 20 roll cut by the second tab die-cutting assembly 252 to form the second electrode plate 20. The second sheet feeding device 254 sequentially feeds the second electrode plate 20 roll from the second unwinding assembly 251 to the second tab die-cutting assembly 252, the second electrode plate 20 cutting assembly 253, and the composite strip B50. In this way, the second feeding mechanism 25 is simple and easy to manufacture.

Referring to FIG. 8, in some embodiments, the laminating machine 2 further includes a material guiding mechanism 300. The forming device 21 transports the composite strip A40 in a direction parallel to the horizontal plane. The material guiding mechanism 300 is located above the material receiving station 14. The material guiding mechanism 300 guides the composite strip A40 from the forming device 21 to the bearing surface 111 at the material receiving station 14 in the second direction.

It can be understood that when the composite strip A40 is guided to the bearing surface 111 located at the material receiving station 14 in the second direction, the composite strip A40 can be driven to move by the action of gravity, thereby reducing the power consumption and the difficulty of stacking the composite sheets 400 on the bearing surface 111.

If the forming device 21 is fed in the second direction, the height of the forming device 21 is large. This not only makes the arrangement of the forming device 21 difficult, but also has poor maintenance convenience.

Therefore, in some embodiments, the forming device 21 transports the composite strip A40 in the direction parallel to the horizontal plane, and the forming device 21 and the laminating platform 1 is provided with a material guiding mechanism 300, so that the composite strip A40 is guided to the bearing surface 111 at the material receiving station 14 in the second direction. In this way, not only the height dimension of the forming device 21 can be reduced to reduce the arrangement difficulty and improve the maintenance convenience, but also when the composite strip A40 is guided to the bearing surface 111 located on the material receiving station 14 in the second direction, the power consumption can be reduced, and the smoothness of stacking the composite sheet 400 on the bearing surface 111 can be improved.

Referring to FIG. 8, in some embodiments, the material guiding mechanism 300 includes a plurality of drive roller 302 sets 301. The plurality of drive roller 302 sets 301 are arranged at intervals in the second direction. Each of the drive roller 302 sets 301 includes two drive rollers 302 spaced apart in the first direction. The spacing between the two drive rollers 302 of each of the drive roller 302 sets 301 is configured to transport the composite strip A40. In this way, the transport stability of the composite strip A40 can be improved.

Optionally, the material guiding mechanism 300 includes two drive roller 302 sets 301.

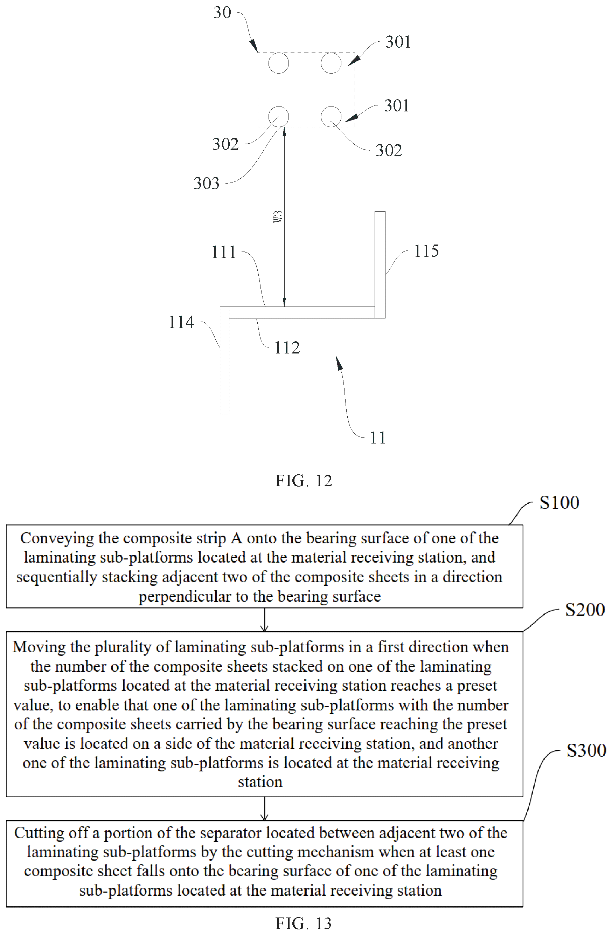

Referring to FIG. 12, FIG. 12 is a schematic view of a position relationship between a material guiding mechanism 300 and a bearing surface 111 according to an embodiment of the present application. In some embodiments, the material guiding mechanism 300 has a first end 303 facing the bearing surface 111, and a distance W3 between the first end 303 and the bearing surface 111 is 1.5 to 2 times of a center spacing. The center spacing is a distance between centers of two adjacent composite sheets 400 when the composite strip A40 is in the flattened state.

It can be understood that the distance W3 between the end of the material guiding mechanism 300 facing the bearing surface 111 and the bearing surface 111 includes, but is not limited to, 1.5 times of the center spacing, 1.6 times of the center spacing, 1.7 times of the center spacing, 1.8 times of the center spacing, or 2 times of the center spacing.

In some embodiments, by limiting the distance W3 between the end of the material guiding mechanism 300 facing the bearing surface 111 and the bearing surface 111, the falling height of the composite sheet 400 can be prevented from being insufficient, and the falling height of the composite sheet 400 can be prevented from being too large to deviate from the preset falling level. In this way, the regularity of stacking the composite sheet 400 can be improved.

In some embodiments, the first feeding mechanism 22 is configured to provide a negative electrode plate. The second feeding mechanism 25 is configured to provide a positive electrode plate.

It can be understood that the active material layer of the positive electrode plate adopts an oily binder, so the surface of the positive electrode plate is relatively smooth, and it is easy to be connected to the separator 30 by hot melting. The active material layer of the negative electrode plate adopts a water-based binder, and the negative electrode plate is mainly composed of layered graphite, and the peeling force between the active material and the foil is lower than that of the positive electrode. Therefore, the peeling force between the negative electrode plate and the separator 30 is much lower than the peeling force between the positive electrode plate and the separator 30.

Based on this, in some embodiments, the negative electrode plate is first compounded with the upper and lower layers of separators 30, and the negative electrode plate is compounded with the upper and lower layers of separators 30 again based on the hot melt connection between the positive electrode plate and the separator 30, which can improve the reliability of the connection between the negative electrode plate and the separator 30.

In some embodiments, the laminating machine 2 further includes a material line detection camera 31. The material line detection camera 31 detects whether the positive tab and the negative tab of the composite strip A40 are folded. If it is folded, the alarm is activated to remind relevant operators to handle.

Referring to FIG. 13, FIG. 13 is a schematic flowchart of a laminating method according to an embodiment of the present application. Accordingly, the embodiments of the present application provide a laminating method. The method is applied to stacking the composite strip A40 on the laminating platform 1 provided by some embodiments of the present application, and the composite strip A40 includes a plurality of composite sheets 400 sequentially connected by the separators 30.

The laminating method includes the following steps S100 to S300.

At step S100, the composite strip A40 is conveyed onto the bearing surface 111 of the laminating sub-platform 11 at the material receiving station 14, and two adjacent composite sheets 400 are stacked in sequence in a direction perpendicular to the bearing surface 111.

At step S200, the plurality of laminating sub-platforms 11 are moved in the first direction when the number of the composite sheets 400 stacked on the laminating sub-platform 11 at the material receiving station 14 reaches a preset value, so that the laminating sub-platform 11 with the number of the composite sheets 400 carried by the bearing surface 111 reaching the preset value is located on a side of the material receiving station 14, and the other laminating sub-platform 11 is located at the material receiving station 14.

At step S300, when the at least one composite sheet 400 falls onto the bearing surface 111 of the laminating sub-platform 11 located at the material receiving station 14, a portion of the separator 30 located between two adjacent laminating sub-platforms 11 is cut off by the cutting mechanism 15.

The following takes the laminating platform 1 including two laminating sub-platforms 11 as an example to specifically illustrate the laminating method. For ease of description, the two laminating sub-platform 11 are a first laminating sub-platform 12 and a second laminating sub-platform 13.

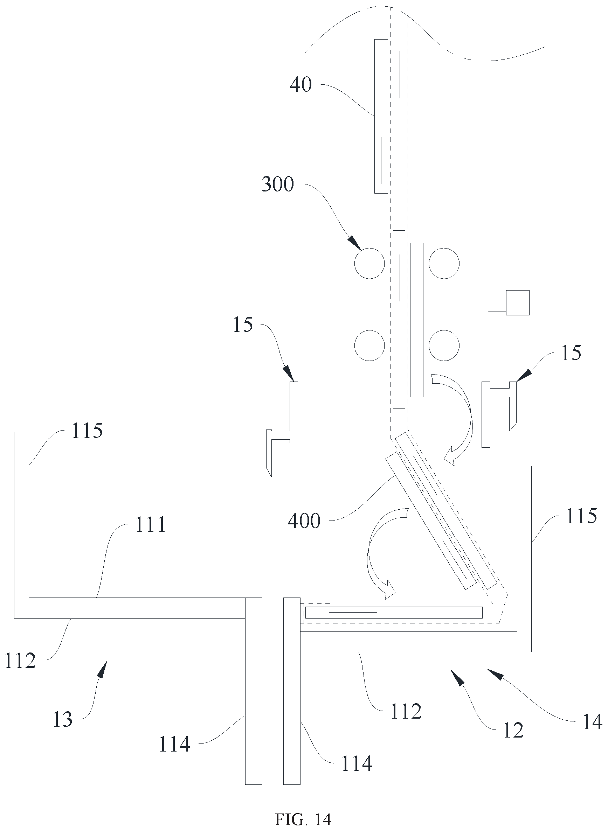

Referring to FIG. 14 to FIG. 17, the laminating method includes the following steps.

The composite strip A40 is conveyed onto the bearing surface 111 of the first laminating sub-platform 12 located at the material receiving station 14, and two adjacent composite sheets 400 are stacked in sequence in a direction perpendicular to the bearing surface 111, as shown in FIG. 14.

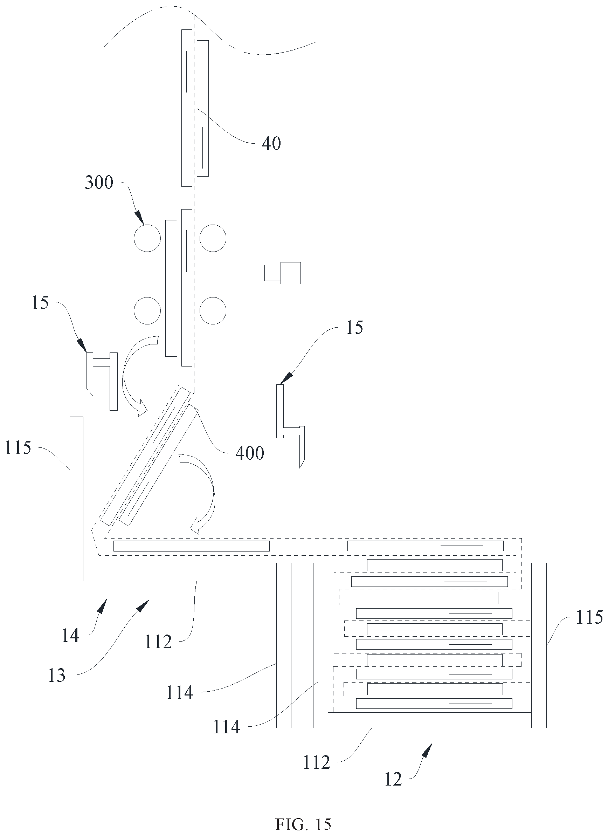

When the number of the composite sheets 400 stacked on the first laminating sub-platform 12 located at the material receiving station 14 reaches a preset value n (n is a positive integer, and n is greater than or equal to 1), the two laminating sub-platforms 11 are moved in the first direction, so that the first laminating sub-platform 12 is located on a side of the material receiving station 14, and the second laminating sub-platform 13 is located at the material receiving station 14; at this time, the (n+1)-th composite sheet 400 falls onto the bearing surface 111 of the second laminating sub-platform 13 with the moving of the first laminating sub-platform 12, as shown in FIG. 15. As the composite sheet 400 continuously falls into the first laminating sub-platform 12, the lifting mechanism 113 of the first laminating sub-platform 12 drives the bearing plate 112 of the first laminating sub-platform 12 to continuously descend, so that the falling height of the composite sheet 400 from the material guiding mechanism 300 is consistent.

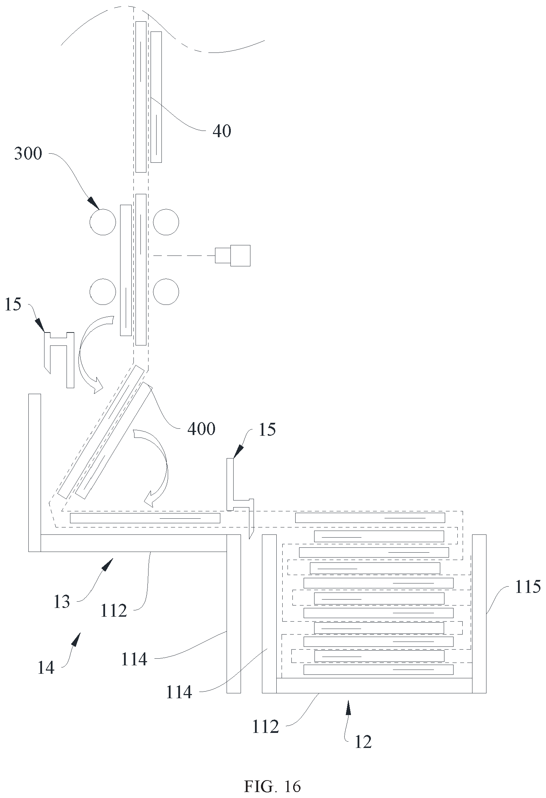

When at least one composite sheet 400 is located on the bearing surface 111 of the second laminating platform 1, the portion of the separator 30 located between the first laminating sub-platform 12 and the second laminating sub-platform 13 is cut off by the cutting mechanism 15, as shown in FIG. 16.

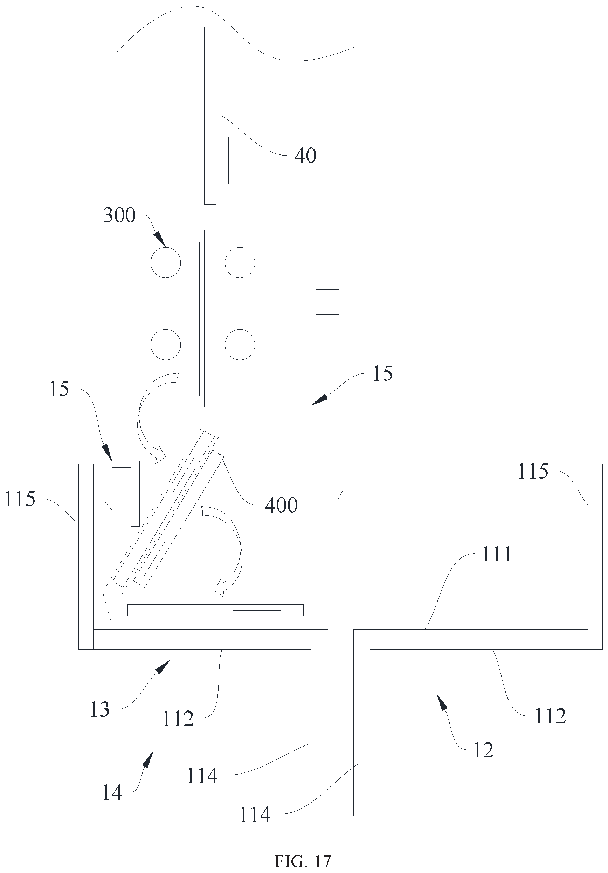

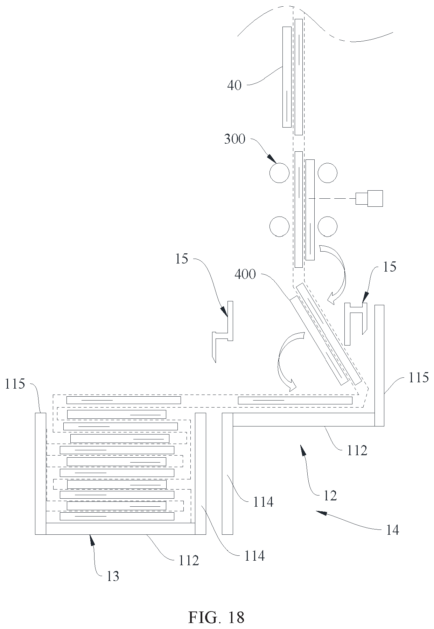

It can be understood that after the portion of the separator 30 located between the first laminating sub-platform 12 and the second laminating sub-platform 13 is cut off, the composite sheets 400 stacked on the first laminating sub-platform 12 is transferred to the next station; meanwhile, the composite sheets 400 are continuously stacked on the second laminating sub-platform 13, as shown in FIG. 17. When the number of the composite sheets 400 stacked on the second laminating sub-platform 13 reaches the preset value n, the two laminating sub-platforms 11 are simultaneously moved in opposite directions, so that the second laminating sub-platform 13 is located on a side of the material receiving station 14, and the (2n+1)-th composite sheet 400 falls onto the bearing surface 111 of the first laminating sub-platform 12 under the movement of the second laminating sub-platform 13. At this time, the first laminating sub-platform 12 is located at the material receiving station 14 for material receiving, as shown in FIG. 18. As the composite sheet 400 continuously falls into the second laminating sub-platform 13, the lifting mechanism 113 of the second laminating sub-platform 13 drives the bearing plate 112 of the second laminating sub-platform 13 to continuously descend, so that the falling height of the composite sheet 400 from the material guiding mechanism 300 is consistent.

Next, the portion of the separator 30 between the first laminating sub-platform 12 and the second laminating sub-platform 13 is cut off by the cutting mechanism 15.

In some embodiments, by providing the laminating method, the plurality of laminating sub-platforms 11 are sequentially arranged in the first direction and moved in the first direction to be located at the material receiving station 14 in turn, so that the composite strip A40 carried by the next laminating sub-platform 11 located at the material receiving station 14 can be guided by the movement of the previous laminating sub-platform 11 located at the material receiving station 14. In this way, the position controllability of the composite strip A40 carried by the laminating sub-platform 11 can be effectively ensured without additional material guiding operations, thereby improving the stacking efficiency of the laminated electrode assembly.

## Claims

1. A laminating platform (1), comprising:
a plurality of laminating sub-platforms (11) sequentially arranged in a first direction, wherein each of the laminating sub-platforms (11) comprises a bearing surface (111) configured to carry a composite strip A(40), the plurality of laminating sub-platforms (11) shares a material receiving station (14), and the plurality of laminating sub-platforms (11) are configured to move in the first direction to enable the plurality of laminating sub-platforms (11) to be located at the material receiving station (14) in turn; and
a cutting mechanism (15) configured to cut a portion of the composite strip A(40) located between adjacent two of the laminating sub-platforms (11).

2. The laminating platform (1) according to claim 1, wherein each of the laminating sub-platforms (11) comprises:
a bearing plate (112) comprising the bearing surface (111); and
a lifting mechanism (113) connected to the bearing plate (112) and configured to adjust a height of the bearing surface (111).

3. The laminating platform (1) according to claim 2, wherein each of the laminating sub-platforms (11) further comprises a fixed baffle (114), the fixed baffle (114) is fixed relative to the lifting mechanism (113), and the fixed baffles (114) of adjacent two of the laminating sub-platforms (11) in the first direction are adjacent to each other;
wherein in a case where the bearing plate (112) is at a lowest position, the fixed baffle (114) is at least partially located on a side of the bearing surface (111) close to the composite strip A(40); and in a case where the bearing plate (112) is at a highest position, the fixed baffle (114) does not extend beyond the bearing surface (111).

4. The laminating platform (1) according to claim 3, wherein in a case where the first direction is a linear direction, two of the laminating sub-platforms (11) located respectively at a head position and a tail position in the first direction each comprises a synchronous baffle (115), and for two of the laminating sub-platforms (11) located respectively at the head position and the tail position in the first direction, the synchronous baffle (115) is connected to the bearing plate (112) and is at least partially located on a side of the bearing surface (111) close to the composite strip A(40), and the synchronous baffle (115) of one of the laminating sub-platforms (11) located at the head position or the tail position is arranged away from adjacent one of the laminating sub-platforms (11).

5. The laminating platform (1) according to any one of claims 1 to 4, wherein the cutting mechanism (15) comprises a cutter (151) and a second drive assembly (152) connected to each other, and the second drive assembly (152) is configured to drive the cutter (151) to reciprocate in a second direction, and the second direction is perpendicular to the bearing surface (111);
wherein the cutter (151) is configured to cut a portion of the composite strip A(40) located between two adjacent laminating sub-platforms (11).

6. The laminating platform (1) according to claim 5, wherein the cutting mechanism (15) further comprises a pressure cutter (154) and a third drive assembly (153), the third drive assembly (153) is connected to the pressure cutter (154) and the second drive assembly (152), and the third drive assembly 153 is configured to drive the pressure cutter 154 and the second drive assembly 152 to reciprocate in the second direction;
wherein the pressure cutter (154) is configured to press down the composite strip A(40) located at the material receiving station (14).

7. The laminating platform (1) according to claim 6, wherein a distance between the pressure cutter (154) and an adjacent edge of the bearing surface (111) located at the material receiving station (14) is in a range of 2 mm to 6 mm.

8. The laminating platform (1) according to any one of claims 1 to 7, wherein the laminating platform (1) further comprises an transposition drive assembly (16), the transposition drive assembly (16) is connected to the plurality of laminating sub-platforms (11), and the transposition drive assembly (16) is configured to drive one of the laminating sub-platforms (11) located at the material receiving station (14) to move to a side of the material receiving station (14), and simultaneously drives another one of the laminating sub-platforms (11) to move to the material receiving station (14).

9. The laminating platform (1) according to any one of claims 1 to 8, wherein two cutting mechanisms (15) are provided, and the two cutting mechanisms (15) are located respectively on two sides of the material receiving station (14) in the first direction, and structures of the two cutting mechanisms (15) are symmetrical to each other in a feeding direction of the composite strip A(40).

10. The laminating platform (1) according to any one of claim 1 to 9, wherein two laminating sub-platforms (11) are provided, and the two laminating sub-platforms (11) are moved back and forth in the first direction to enable the two laminating sub-platforms (11) to be located at the material receiving station (14) in turn.

11. A laminating machine (2), comprising:
a forming device (21) configured to form the composite strip A(40) and comprising a plurality of composite sheets (400) sequentially connected by at least one separator (30); and
the laminating platform (1) according to any one of claim 1 to 10;
wherein the composite strip A(40) output by the forming device (21) is configured to move in a second direction toward the bearing surface (111), and the second direction is perpendicular to the bearing surface (111).

12. The laminating machine (2) according to claim 11, wherein the forming device (21) comprises:
a first feeding mechanism (22) configured to provide a plurality of first electrode plates (10);
two separator feeding mechanisms (23) configured to feed the separators (30) to two sides of the first electrode plates (10) respectively;
a first thermal compounding mechanism (24) configured to heat at least one of the separator (30) and the first electrode plates (10) and to press the separator (30) and the first electrode plates (10) to form a composite strip B(50);
two second feeding mechanisms (25) configured to feed a plurality of second electrode plates (20) to two sides of the composite strip B(50) respectively, the two second feeding mechanisms (25) feeding the second electrode plates alternately in sequence; and
a second thermal compounding mechanism (26) configured to heat at least one of the composite strips and the second electrode plates (20) and to press the second electrode plates (20) and the composite strip B(50) to form the composite strip A(40).

13. The laminating machine (2) according to claim 12, wherein the first thermal compounding mechanism (24) comprises a first heating assembly (241) and a first compression roller assembly (242), the first heating assembly (241) is configured to heat the first electrode plates (10), and the first compression roller assembly (242) is configured to press the separator (30) and the first electrode plates (10) after heating.

14. The laminating machine (2) according to claim 12 or 13, wherein the second thermal compounding mechanism (26) comprises at least one second heating assembly (261) and a second compression roller assembly (262), the second heating assembly (261) is configured to heat the second electrode plates (20), and the second compression roller assembly (262) is configured to press the composite strip B(50) and the second electrode plates (20) after heating;
wherein two second heating assemblies (261) are provided, which are respectively adjacent to discharge ports of the two second feeding mechanisms (25).

15. The laminating machine (2) according to claim 14, wherein the forming device (21) further comprises a heating and heat preservation assembly (27), the heating and heat preservation assembly (27) is arranged between one of the second feeding mechanisms (25) and the second compression roller assembly (262), and the heating and heat preservation assembly (27) is configured to preserve heat for the second electrode plate (20) that is in contact with the composite strip B(50) and heated.

16. The laminating machine (2) according to any one of claims 11 to 15, wherein a heating mode of the first thermal compounding mechanism (24) and/or the second thermal compounding mechanism (26) is any one of the following heating modes: electric heating, magnetic field heating, and heat exchange plate heating.

17. The laminating machine (2) according to any one of claims 11 to 16, wherein the forming device (21) further comprises a separator edge-sealing mechanism (28), the separator edge-sealing mechanism (28) is located between the first thermal compounding mechanism (24) and a discharge port of one of the second feeding mechanisms (25), and the separator edge-sealing mechanism (28) is configured to connect portions of two layers of the separators (30) located between adjacent two of the first electrode plates (10).

18. The laminating machine (2) according to claim 17, wherein the forming device (21) further comprises a deviation rectifying device (29), a part of the separator (30) located between adjacent two of the first electrode plates (10) is a spacing part, and the deviation rectifying device (29) is configured to collect a position information of the spacing part relative to a working end (281) of the separator edge-sealing mechanism (28), and controls a conveying speed of the composite strip A(40) according to the position information.

19. The laminating machine (2) according to claim 18, wherein the deviation rectifying device (29) comprises an image capture terminal (291) configured to collect the position information;
wherein the image capture terminal (291) is a charge coupled device (CCD) visual camera, and/or, a spacing between the image capture terminal (291) and the working end (281) of the separator edge-sealing mechanism (28) is 1 to 3 times of a center spacing, and the center spacing is a distance between centers of adjacent two of the composite sheets (400) in a case where the composite strip A(40) is in a flattened state.

20. The laminating machine (2) according to any one of claims 11 to 19, wherein the first feeding mechanism (22) comprises a first unwinding assembly (221), a first tab die-cutting assembly (222), and a first electrode plate (10) cutting assembly (223); wherein the first unwinding assembly (221) is configured to mount a first electrode plate roll (60), and the first tab die-cutting assembly (222) is configured to cut an uncoated foil region of the first electrode plate roll (60) from the first unwinding assembly (221) to form a first tab; and wherein the first electrode plate (10) cutting assembly (223) is configured to cut the first electrode plate roll (60) cut by the first tab die-cutting assembly (222) to form the first electrode plates (10); and/or
each of the second feeding mechanisms (25) comprises a second unwinding assembly (251), a second tab die-cutting assembly (252), a second electrode plate (20) cutting assembly (253), and a second sheet feeding device (254); wherein the second unwinding assembly (251) is configured to mount a second electrode plate roll (70), and the second tab die-cutting assembly (252) is configured to cut an uncoated foil region of the second electrode plate roll (70) from the second unwinding assembly (251) to form a second tab; and the second electrode plate (20) cutting assembly (253) is configured to cut the second electrode plate roll (70) cut by the second tab die-cutting assembly (252) to form the second electrode plates (20); and the second sheet feeding device (254) is configured to transport the second electrode plate roll (70) from the second unwinding assembly (251) to the second tab die-cutting assembly (252), the second electrode plate (20) cutting assembly (253), and the composite strip B(50) in sequence.

21. The laminating machine (2) according to any one of claims 11 to 20, wherein the laminating machine (2) further comprises a material guiding mechanism (300); wherein the forming device (21) is configured to transport the composite strip A(40) in a direction parallel to a horizontal plane; the material guiding mechanism (300) is located above the material receiving station (14), and the material guiding mechanism (300) is configured to guide the composite strip A(40) from the forming device (21) onto the bearing surface (111) located at the material receiving station (14) in the second direction and in a stacked manner.

22. The laminating machine (2) according to claim 21, wherein the material guiding mechanism (300) comprises a plurality of drive roller sets (301), the plurality of drive roller sets (301) are arranged at intervals in the second direction, each of the drive roller sets (301) comprises two drive rollers (302) arranged at intervals in the first direction, and a distance between the two drive rollers (302) of each of the drive roller sets (301) is configured to transport the composite strip A(40); and/or
the material guiding mechanism (300) comprises a first end (303) facing the bearing surface (111) located at the material receiving station (14), a distance between the first end (303) and the bearing surface (111) is 1.5 to 2 times of a center spacing, and the center spacing is a distance between centers of adjacent two of the composite sheets (400) in a case where the composite strip A(40) is in a flattened state.

23. The laminating machine (2) according to any one of claims 11 to 22, wherein the first feeding mechanism (22) is configured to provide a plurality of negative electrode plates; and the second feeding mechanisms (25) are configured to provide a plurality of positive electrode plates.

24. A laminating method, applied to stacking a composite strip A(40) on the laminating platform (1) according to any one of claims 1 to 10, wherein the composite strip A(40) comprises a plurality of composite sheets (400) sequentially connected by at least one separator (30);
wherein the laminating method comprises:
conveying the composite strip A(40) onto the bearing surface (111) of one of the laminating sub-platforms (11) located at the material receiving station (14), and sequentially stacking adjacent two of the composite sheets (400) in a direction perpendicular to the bearing surface (111);
moving the plurality of laminating sub-platforms (11) in a first direction when the number of the composite sheets (400) stacked on one of the laminating sub-platforms (11) located at the material receiving station (14) reaches a preset value, to enable that one of the laminating sub-platforms (11) with the number of the composite sheets (400) carried by the bearing surface (111) reaching the preset value is located on a side of the material receiving station (14), and another one of the laminating sub-platforms (11) is located at the material receiving station (14); and
cutting off a portion of the separator (30) located between adjacent two of the laminating sub-platforms (11) by the cutting mechanism (15) when at least one composite sheet (400) falls onto the bearing surface (111) of one of the laminating sub-platforms (11) located at the material receiving station (14).
